# FASCICULE DE BREVET EUROPEEN

(11) **EP 1 140 339 B1**
(45) Date de publication et mention de la délivrance du brevet: **24.03.2004**
(21) Numéro de dépôt: 99973535.0
(22) Date de dépôt: 29.11.1999
(51) Int. Cl.: B01F 3/08, C02F 1/68

(54) **PROCEDE D'INJECTION REGULEE DE DIOXYDE DE CARBONE LIQUIDE DANS UN LIQUIDE SOUS PRESSION**
VERFAHREN ZUM REGULIERTEN EINSPRITZEN VON FLÜSSIGEM KOHLENDIOXID IN EINE UNTER DRUCK STEHENDE FLÜSSIGKEIT
METHOD FOR REGULATED INJECTION OF LIQUID CARBON DIOXIDE IN A PRESSURISED LIQUID

(30) Priorité: 29.12.1998 FR 9816534
(43) Date de publication de la demande: 10.10.2001
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: BERNARD, Frédéric, F-92100 Boulogne Billancourt (FR); BRAS, Dominique, F-93290 Tremblay-en-France (FR); BUIL, José, F-94260 Fresnes (FR)
(74) Mandataire: Ducreux, Marie
(86) Numéro de dépôt international: PCT/FR1999/002946
(87) Numéro de publication internationale: WO 2000/038825

(56) Documents cités:
- EP-A- 0 075 804
- EP-A- 0 376 823
- EP-A- 0 421 597
- EP-A- 0 656 316
- WO-A-91/02964
- FR-A- 2 368 990
- FR-A- 2 598 095
- US-A- 3 716 346
- US-A- 4 986 296

## Description

La présente invention a pour objet un procédé d'injection régulée de dioxyde de carbone liquide (CO_{2_{L}}) dans un liquide sous pression. La régulation de l'injection du CO_{2_{L}} est, selon l'invention, la régulation d'un débit fixe, en mode cadencé.

Le procédé de l'invention convient tout particulièrement pour l'injection de CO_{2_{L}} dans un liquide en circulation sous pression dans une canalisation.

Le contexte de la présente invention est celui du traitement au dioxyde de carbone (CO₂) de tout type de liquides sous pression, et notamment de liquides consistant en des milieux réactionnels, des effluents industriels, de l'eau potable ... Dans le cadre de ladite présente invention, la Demanderesse propose une technique optimisée d'injection de dioxyde de carbone liquide (CO_{2_{L}}), notamment optimisée tant du point de vue de la protection du liquide dans lequel ledit CO_{2_{L}} est injecté que du point de vue de la protection de l'environnement.

De manière générale, l'injection de dioxyde de carbone gazeux (CO_{2_{G}}) est une technique parfaitement maîtrisée. Toutefois, la mise en oeuvre de ladite technique suppose une vaporisation préalable du dioxyde de carbone, stocké à l'état liquide : (CO_{2_{L}}) : 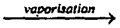 CO_{2_{G}}. Une telle vaporisation préalable sous-entend la présence sur le site d'utilisation d'un vaporiseur et implique une consommation d'électricité non négligeable. Pouvoir s'exonérer d'une telle vaporisation préalable est évidemment très intéressant économiquement, tant en référence aux économies sur l'investissement (absence de vaporiseur) qu'en référence aux économies sur les coûts d'exploitation (absence de consommation électrique).

L'injection ―directe― de CO_{2_{L}}, si elle présente donc un intérêt économique certain, se révèle toutefois une technique plus difficile à mettre en oeuvre. L'homme du métier n'ignore pas ce fait.

La Demanderesse a déjà proposé une technique d'injection ―directe― de CO_{2_{L}}. Cette technique est décrite dans la demande de brevet FR-A-2 641 854. Elle est relativement compliquée et sa mise en oeuvre nécessite un investissement important. Sa mise en oeuvre ne se justifie, en fait, généralement, qu'au sein de grosses installations, si l'on a d'importants débits de CO_{2_{L}} à injecter. Ladite technique fait intervenir, pour une injection d'un débit variable de CO_{2_{L}} (débit de CO_{2_{L}} régulé, permanent et non cadencé), injection régulée en mode proportionnel :
- une vanne pilotée, du type proportionnelle (à débit variable), sans injecteur ;
- un déverseur, pour la délivrance du CO_{2_{L}} ;
et est obligatoirement mise en oeuvre avec une pression de CO₂ entre ladite vanne à débit variable et ledit déverseur, supérieure à la pression du point triple du CO₂ (pression supérieure à 5,2 bars).

La Demanderesse a souhaité développer une autre technique d'injection régulée de CO_{2_{L}} dans un liquide sous pression, technique notamment plus aisée à mettre en oeuvre. Elle propose présentement une telle autre technique, particulièrement adaptée (mais non strictement limitée) aux contextes dans lesquels le gros investissement nécessaire à la mise en oeuvre de la technique selon FR-A-2 641 854 n'est plus économiquement intéressant. Selon ladite autre technique présentement revendiquée, le CO_{2_{L}} est injecté à un débit fixe, en mode cadencé (en tout ou rien). La régulation de l'injection, selon l'invention, est d'un autre type que celle selon FR-A-2 641 854. Elle peut, dans l'absolu, être considérée comme moins performante.

Lors de la mise en oeuvre de ce type d'injection de CO_{2_{L}}, injection régulée en mode cadencé, il convient d'être capable, à chaque arrêt de l'injection du CO_{2_{L}}, d'éviter :
- toute remontée du liquide sous pression, traité par ledit CO_{2_{L}}, dans le dispositif d'injection dudit CO_{2_{L}} (ce qui est susceptible d'entraîner le bouchage de l'injecteur avec, par exemple, des résidus solides contenus dans ledit liquide) ; et
- toute formation de bouchon de glace hydrique, particulièrement au niveau dudit dispositif d'injection dudit CO_{2_{L}} (froid).

Confrontée à ce problème technique, inhérent à la mise en oeuvre de l'injection régulée en mode cadencée de CO_{2_{L}} dans un liquide sous pression, la Demanderesse préconise, à chaque arrêt de l'injection dudit CO_{2_{L}}, l'intervention d'un gaz. Ledit gaz a pour double fonction de repousser le liquide traité, sous pression, et de protéger (d'isoler) le dispositif d'injection (qui reste ainsi opérationnel) dudit liquide traité, susceptible de geler sur zone.

Selon son objet, l'invention concerne donc un procédé original d'injection régulée de dioxyde de carbone liquide (CO_{2_{L}}) dans un liquide sous pression et plus précisément un procédé d'injection régulée, à un débit fixe, en mode cadencé, de CO_{2_{L}} dans un liquide sous pression, mis en oeuvre sous protection d'un flux gazeux (lors des arrêts de ladite injection de CO_{2_{L}}).

Selon ledit procédé original de l'invention, ledit CO_{2_{L}} est injecté dans le liquide sous pression à l'intérieur d'une enceinte dans les conditions ci-après :
- il est injecté à un débit fixe, en mode cadencé, par un dispositif d'injection, comprenant une vanne d'injection et une tête d'injection piquée dans une paroi de ladite enceinte ; ladite tête d'injection étant directement positionnée en sortie de ladite vanne d'injection ;
- dès chaque arrêt de son injection, un gaz se substitue à lui : dès chaque arrêt de ladite injection de dioxyde de carbone liquide (CO_{2_{L}}), un gaz est délivré dans ledit liquide au travers de ladite tête d'injection, en lieu et place dudit dioxyde de carbone liquide (CO_{2_{L}}) ; ledit gaz étant délivré à une pression suffisante pour éviter toute remontée dudit liquide à l'intérieur de ladite tête d'injection.

L'injection de CO_{2_{L}}, selon le procédé de l'invention, est une réelle injection, une injection directe dans le liquide à traiter, au travers d'une paroi de l'enceinte, renfermant ledit liquide sous pression. Pour sa mise en oeuvre, ladite injection fait intervenir un dispositif d'injection adéquat qui comprend une vanne d'injection et une tête d'injection. Ladite vanne d'injection comprend une vanne, par exemple du type à boisseau sphérique, associée à un injecteur. Ledit injecteur est plus ou moins intégré dans la structure de ladite vanne. Pour un bon fonctionnement de l'injection, l'homme du métier conçoit aisément d'une part que l'injecteur ne doit pas être vraiment séparé de la vanne et que d'autre part la tête d'injection doit être directement positionnée en sortie de la vanne d'injection.

L'injection régulée selon l'invention est comme déjà indiqué du type injection d'un débit fixe, préalablement fixé, en mode cadencé. La vanne d'injection fonctionne en tout ou rien.

Dès que ladite vanne est fermée, que le CO_{2_{L}} n'est plus injecté, de façon caractéristique, un gaz intervient. Il intervient, au niveau de la tête d'injection (en aval de la vanne d'injection), en lieu et place dudit CO_{2_{L}}, pour être délivré dans le liquide sous pression. On conçoit aisément que, selon une variante avantageuse, ladite tête d'injection comporte au moins deux entrées :
- une pour le CO_{2_{L}},
- une pour le gaz de protection ;
et une sortie pour la délivrance, en alternance, desdits CO_{2_{L}} et gaz de protection, au sein du liquide sous pression.

Ledit gaz, pour assurer son rôle de gaz protecteur du dispositif d'injection vis-à-vis du liquide sous pression, intervient bien évidemment à une pression suffisante.

Ledit gaz de protection (protection notamment thermique vis-à-vis du CO_{2_{L}} injecté à environ -80°C) qui intervient, de façon caractéristique, dans la mise en oeuvre selon l'invention de l'injection de CO_{2_{L}} en mode cadencé dans un liquide sous pression, peut notamment consister en un gaz "inerte" vis-à-vis dudit liquide, "compatible" avec ledit liquide, non susceptible d'altérer celui-ci, de générer des réactions chimiques en son sein (on évoque ici au moins une inertie relative). Il peut notamment s'agir d'un gaz inerte au sens chimique de l'expression (on évoque ici une inertie absolue), d'un gaz inerte tel que l'azote (N₂).

Il n'est toutefois nullement exclu du cadre de l'invention de faire intervenir, à titre de gaz de protection, un autre type de gaz, un gaz non inerte. Ainsi, selon une variante particulièrement préférée, ledit gaz de protection n'est pas un gaz inerte mais consiste en du dioxyde de carbone : CO_{2_{G}}. Dans le cadre de cette variante, le liquide sous pression reçoit donc en alternance du CO_{2_{L}} et du CO_{2_{G}}. Ledit CO_{2_{G}} peut provenir de toute source convenable. Avantageusement, il résulte de la vaporisation d'une fraction de CO_{2_{L}}, prélevée sur le circuit d'alimentation en CO_{2_{L}} du dispositif d'injection, en amont dudit dispositif d'injection. Une unique source d'alimentation en CO_{2_{L}} est ainsi nécessaire pour la mise en oeuvre de cette variante avantageuse du procédé de l'invention. L'intervention d'un autre gaz non inerte peut aussi être sciemment prévue ; ledit gaz assurant alors outre sa fonction primaire de gaz protecteur, au moins une autre fonction.

Quelle que soit la nature du gaz délivré, lors des arrêts d'injection du CO_{2_{L}}, dans le liquide sous pression - gaz inerte, CO_{2_{G}}, autre gaz - il peut être opportun d'évacuer ledit gaz, au moins en partie, dudit liquide. Une telle évacuation ne peut être préjudiciable, si elle est mis en oeuvre judicieusement, dans la mesure où ledit gaz, par sa simple délivrance dans le liquide, a rempli sa fonction de sécurisation de l'injection de CO_{2_{L}}. Par contre, elle peut s'avérer, dans certains contextes, très opportune, voire quasi obligatoire. On peut notamment ainsi éviter de créer des nappes ou poches gazeuses, conséquentes, dans l'enceinte renfermant le liquide sous pression.

Si ladite enceinte consiste en une canalisation au sein de laquelle circule ledit liquide sous pression, sous l'action d'une pompe, l'homme du métier comprend aisément que de telles poches gazeuses sont susceptibles de désamorcer ladite pompe. Pour garder constamment l'aval de ladite pompe en charge liquide, on préconise donc vivement, lors de la mise en oeuvre du procédé de l'invention, d'évacuer, opportunément (lors des arrêts de ladite pompe) le gaz délivré au sein du liquide.

De manière générale, le gaz protecteur délivré, lors des arrêts d'injection de CO_{2_{L}}, est donc avantageusement, au moins en partie, évacué. Le gaz ainsi récupéré peut être avantageusement recyclé (à titre de gaz protecteur).

L'injection du CO_{2_{L}}, selon le procédé de l'invention :
- à un débit fixe, en mode cadencé,
- sous protection d'un flux gazeux,
est généralement mise en oeuvre dans les conditions ci-après : le CO_{2_{L}} est injecté à une pression amont comprise entre environ 14.10⁵ et 20.10⁵ Pa ( 14 et 20 bars) et à une température amont comprise entre -20°C et -30°C.

Avantageusement, pour des raisons évidentes de sécurité, ladite injection de CO_{2_{L}} est mise en oeuvre avec un contrôle de la température du liquide dans lequel ledit CO_{2_{L}} est injecté ; l'injection dudit CO_{2_{L}} étant arrêtée dès que la température du liquide est inférieure à une température de consigne. Il convient en effet d'être en mesure d'éviter à tout moment les conséquences d'une durée anormale d'injection de CO_{2_{L}} (notamment inhérente à des pannes d'appareillages : panne de la vanne d'injection par exemple), d'éviter à tout moment une baisse dangereuse de la température du liquide pouvant conduire à la prise en glace hydrique de l'enceinte renfermant ledit liquide.

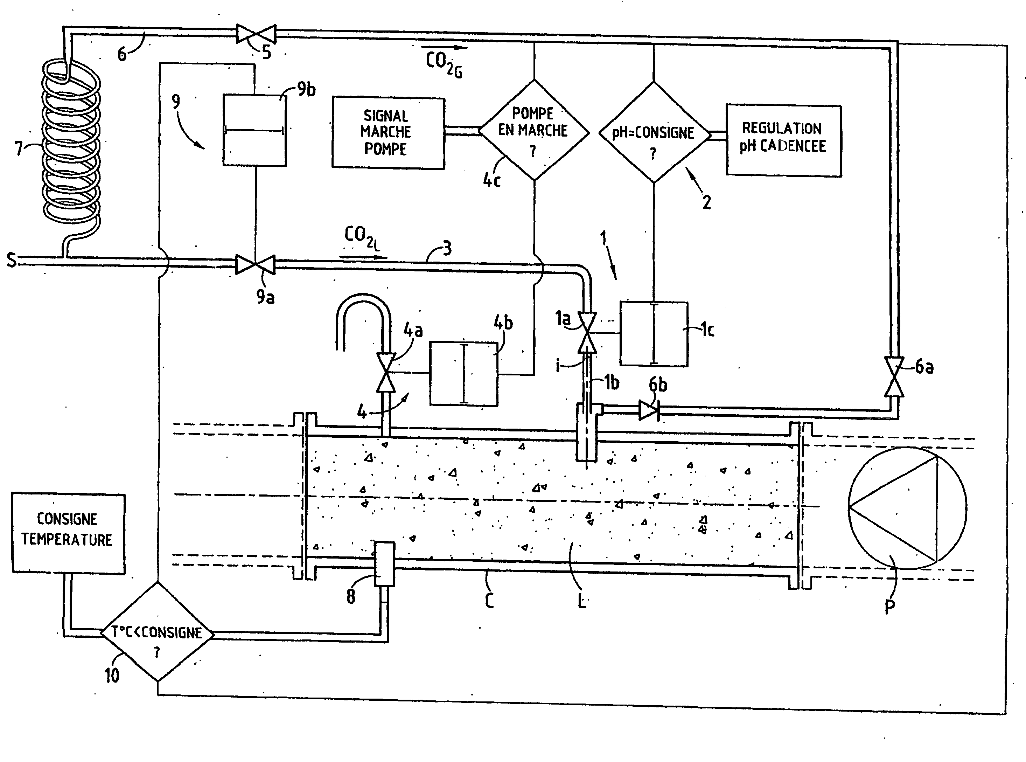

Le procédé de l'invention, tel que décrit ci-dessus en termes généraux et ci-après, plus précisément, en référence à l'unique figure annexée, peut être mis en oeuvre dans différents contextes. Comme déjà indiqué, il convient particulièrement pour l'injection régulée en mode cadencé de CO_{2_{L}} dans un liquide en circulation sous pression dans une canalisation. Un tel liquide peut circuler jusqu'à des pressions de 8-10 bars. Il circule généralement à des pressions de 4-5 bars En tout état de cause, la Demanderesse a pu vérifier la faisabilité et les avantages de son nouveau procédé fiable d'injection de CO_{2_{L}} dans des liquides circulant à de telles pressions.

Les liquides "traités au CO_{2_{L}} selon l'invention" peuvent consister en toutes sortes de liquides : il peut notamment s'agir de milieux réactionnels, d'effluents industriels, d'eau potable ...

Ils peuvent être traités au CO_{2_{L}}, à différentes fins, et notamment à des fins de détartrage et/ou de prévention de l'entartrage des dispositifs qui les renferment et où à l'intérieur desquels ils circulent.

Le procédé de l'invention convient également, tout particulièrement, pour abaisser et avantageusement contrôler le pH d'effluents industriels, avant leur rejet à l'égout. Dans ce contexte, l'injection du CO_{2_{L}} est avantageusement directement asservie à la mesure du pH.

On se propose de décrire maintenant, en termes généraux, un dispositif d'injection régulée de dioxyde de carbone liquide (CO_{2_{L}}), dans un liquide sous pression à l'intérieur d'une enceinte ; dispositif convenant à la mise en oeuvre du procédé, objet de ladite présente invention.

Ledit dispositif comprend :
- une vanne d'injection et une tête d'injection piquée dans une paroi de ladite enceinte, ladite tête d'injection étant directement positionnée en sortie de ladite vanne d'injection ; ladite vanne d'injection étant reliée par un circuit d'alimentation à une source convenable en dioxyde de carbone liquide (CO_{2_{L}}) et convenant pour une injection à un débit fixe, en mode cadencé ; et
- des moyens d'alimentation de ladite tête d'injection avec un gaz.

Il comprend en fait des moyens adéquats pour la mise en oeuvre d'une injection de CO_{2_{L}} à un débit fixe, en mode cadencé ; moyens agencés pour permettre la délivrance du gaz protecteur à chaque arrêt de ladite injection de CO_{2_{L}}. Lesdits moyens adéquats comprennent la vanne d'injection - vanne + injecteur ou vanne incorporant ledit injecteur - et une tête d'injection. De façon originale, ladite tête d'injection est, selon l'invention, susceptible d'être alimentée, en alternance, par du CO_{2_{L}} et du gaz pour la délivrance dudit CO_{2_{L}} et dudit gaz dans le liquide sous pression. Avantageusement, comme déjà indiqué, ladite tête d'injection comporte au moins deux entrées et une sortie. De façon particulièrement avantageuse, elle comporte en vis-à-vis de l'injecteur une première entrée pour le CO_{2_{L}}, en vis-à-vis de ladite première entrée une sortie (directe) dans le liquide, et, disposée à 90° de son axe reliant ladite première entrée et ladite sortie, une seconde entrée pour le gaz.

La tête d'injection du dispositif d'injection selon l'invention est donc reliée d'une part à une source convenable en CO_{2_{L}} et d'autre part à une source convenable en gaz protecteur.

Dans la mesure où l'on a vu que ledit gaz protecteur peut consister en du CO_{2_{G}} et qu'avantageusement ledit CO_{2_{G}} résulte de la vaporisation d'une fraction de CO_{2_{L}} prélevée sur le circuit d'alimentation en CO_{2_{L}} de la vanne d'injection, on comprend que selon une variante avantageuse, le dispositif de l'invention comporte, agencés sur ledit circuit d'alimentation en CO_{2_{L}}, en amont de la vanne d'injection, des moyens de prélèvement et de vaporisation d'une fraction dudit CO_{2_{L}} ; lesdits moyens de prélèvement et de vaporisation étant reliés aux moyens d'alimentation en gaz de la tête d'injection. Le dispositif d'injection sécurisée de CO_{2_{L}} selon l'invention peut donc fonctionner en étant relié à une unique source de CO_{2_{L}}.

Ledit dispositif comporte les moyens essentiels précisés ci-dessus, bien évidemment associés à des moyens de commande adéquats. Lesdits moyens essentiels sont également associés, avantageusement :
- à des moyens d'évacuation du gaz délivré dans le liquide ainsi que, selon une variante particulièrement avantageuse, à des moyens de recyclage dudit gaz évacué récupéré. Dans le contexte particulier où la tête d'injection du dispositif d'injection selon l'invention est piquée dans la paroi d'une canalisation à l'intérieur de laquelle circule sous pression le liquide, sous l'action de moyens de mise en circulation sous pression dudit liquide (tels des pompes), lesdits moyens d'évacuation du gaz délivré dans ladite canalisation sont bien évidemment agencés en aval de ladite tête d'injection et sont avantageusement asservis auxdits moyens de mise en circulation sous pression dudit liquide de sorte que l'évacuation dudit gaz soit mise en oeuvre sans effet sur la mise en circulation dudit liquide. Il est, en tout état de cause, à la portée de l'homme du métier, de concevoir de tels moyens d'évacuation du gaz délivré dans l'enceinte et de coupler éventuellement lesdits moyens d'évacuation à des moyens de recyclage dudit gaz délivré récupéré ;
- à un dispositif de contrôle de la température du liquide dans lequel le CO_{2_{L}} est injecté. L'intervention d'un tel dispositif de contrôle est opportune, pour des raisons évidentes de sécurité. Ce dispositif de contrôle comporte avantageusement des moyens de mesure de la température du liquide "traité" et des moyens d'arrêt de l'injection du CO_{2_{L}} ; moyens à actionner lorsque ladite température est inférieure à une température de consigne. On conçoit que, de façon particulièrement avantageuse, ledit dispositif comprend aussi des moyens d'asservissement automatique desdits moyens d'arrêt de l'injection de CO_{2_{L}}, moyens d'asservissement qui activent automatiquement lesdits moyens d'arrêt dès que la température mesurée est inférieure à une valeur de consigne. Avec ou sans intervention de tels moyens d'asservissement (avantageusement avec), on préconise vivement que les moyens d'arrêt de l'injection du CO_{2_{L}} comportent une vanne dite de sécurité, montée sur le circuit d'alimentation en CO_{2_{L}}, en amont de la vanne d'injection du CO_{2_{L}}. On dispose ainsi d'un dispositif de contrôle de la température qui assure indépendamment de la régulation (puisque la vanne de sécurité ou vanne d'isolement est en amont de la vanne d'injection) la protection en température positive de l'installation.

La présente invention est maintenant décrite en référence à l'unique figure annexée. Sur ladite figure, on a représenté, de façon schématique, un dispositif qui convient à la mise en oeuvre d'une variante avantageuse du procédé de l'invention.

Du dioxyde de carbone liquide (CO_{2_{L}}), provenant d'une source S, est injecté selon l'invention - sous protection d'un flux gazeux de dioxyde de carbone (CO_{2_{G}}) lors des arrêts d'injection - dans un effluent liquide L, mis en circulation sous pression au moyen de la pompe P, dans la canalisation C. Ladite injection de CO_{2_{L}}, à un débit fixe, est régulée en mode cadencé.

Elle est mise en oeuvre, asservie à des moyens d'asservissement automatique 2, pour réguler le pH dudit effluent liquide L.

Les moyens d'injection 1 dudit CO_{2_{L}}, dans l'effluent liquide L, sont principalement constitués d'une vanne d'injection la, à boisseau sphérique, directement reliée à une tête d'injection 1b, piquée dans la canalisation C. Ladite vanne la est équipée d'un injecteur i, côté tête d'injection 1b. Ladite vanne d'injection 1a fonctionne en tout ou rien : elle est soit ouverte, soit fermée. Son ouverture et sa fermeture sont commandées par l'actionneur 1c, asservi aux moyens d'asservissement automatique 2. Ledit actionneur 1c, décalé en zone tempérée, est alimenté en gaz via le circuit d'alimentation en CO_{2_{G}}, pour exercer son action.

Ladite vanne 1a est ouverte lorsque le pH de l'effluent liquide L est supérieur à une valeur de consigne, préalablement fixée ; elle est fermée, par l'actionneur 1c, lorsque ledit pH demeure inférieur ou égal à ladite valeur de consigne. Ladite vanne la est alimentée en CO_{2_{L}} via le circuit d'alimentation 3 relié à la source S.

La tête d'injection 1b, piquée dans la canalisation C, permet, en alternance, la délivrance, dans l'effluent liquide L, du CO_{2_{L}} et du CO_{2_{G}}. Elle comporte :
- en vis-à-vis de l'injecteur i de la vanne la, une première entrée pour le CO_{2_{L}};
- en vis-à-vis de ladite première entrée, une sortie (dans l'effluent liquide L),
- et, disposée à 90° de son axe reliant ladite première entrée et ladite sortie, une seconde entrée pour le CO_{2_{G}}.

Une ligne 6 de dioxyde de carbone à l'état gazeux (CO_{2_{G}}) alimente en permanence cette seconde entrée, via, dans l'ordre, un serpentin 7, un détendeur 5, une vanne de réglage de débit 6a et enfin un clapet anti-retour 6b. Dans le cadre de la variante représentée, le gaz protecteur utilisé est donc du dioxyde de carbone qui a été prélevé sur le circuit d'alimentation 3 en dioxyde de carbone liquide. La fraction de CO_{2_{L}} prélevée se réchauffe et se vaporise dans ledit serpentin 7, à température ambiante. Elle est ensuite détendue par le détendeur 5 avant d'être injectée via la vanne de réglage de débit 6a, le clapet anti-retour 6b et la tête d'injection 1b.

La canalisation C est équipée, en aval de la tête d'injection 1b, de moyens d'évacuation 4 du CO_{2_{G}} injecté. Lesdits moyens d'évacuation 4 comprennent :
- une vanne de mise à l'air libre 4a,
- un actionneur 4b, qui commande la fermeture de ladite vanne 4a, via des moyens d'asservissement automatiques 4c.

Ladite vanne de mise à l'air libre 4a est normalement ouverte hors tension (toujours ouverte). Ainsi, en cas de panne d'alimentation électrique, elle assure automatiquement l'échappement du CO_{2_{G}} de protection. Elle se ferme, sous l'action de l'actionneur 4b, dès que la pompe P de transfert de l'effluent liquide L est en fonctionnement. Au contraire, dès que ladite pompe P s'arrête, ladite vanne 4a s'ouvre, assurant ainsi l'échappement à l'air libre du CO_{2_{G}} injecté, évitant la formation de poches de gaz en aval de l'injection. Cette vanne 4a permet donc de toujours garder l'aval de la pompe P en charge liquide. Tout redémarrage de ladite pompe P peut avoir lieu sans risque de désamorçage.

Le dispositif représenté comporte par ailleurs une unité de surveillance de la température de l'effluent liquide L. En effet, si la durée d'injection de CO_{2_{L}} se prolonge anormalement (par exemple, en cas de panne du pHmètre, de panne du régulateur de pH, de panne de la vanne d'injection 1a), la température dudit effluent liquide L peut baisser dangereusement, jusqu'à la prise en glace hydrique de la canalisation C.

Ladite unité de surveillance de la température comporte :
- une sonde de température 8, mesurant la température dudit effluent liquide L ;
- un dispositif de contrôle de cette température qui lui-même comprend des moyens d'asservissement automatique 10 et un actionneur dé vanne 9b ;
- une vanne dite de sécurité 9a, pilotée par ledit actionneur 9b, agencée sur le circuit d'alimentation 3 en CO_{2_{L}}, permettant l'isolement de l'alimentation en CO_{2_{L}}.

Ladite vanne 9a et son actionneur 9b constituent les moyens d'arrêt 9 de ladite alimentation en CO_{2_{L}}.

Cette unité de surveillance assure une protection en température positive, indépendante de la régulation du pH puisque la vanne de sécurité 9a (ou vanne d'isolement) est en amont de la vanne d'injection 1a. On note par ailleurs que ladite vanne de sécurité 9a est bien évidemment en aval du point de prélèvement de la fraction de CO_{2_{L}} destinée à générer dans le serpentin 7 le CO_{2_{G}} utile à la régulation, selon l'invention.

Entre ladite vanne de sécurité 9a et la vanne d'injection 1a, on trouve une soupape de sécurité.

On note également que les actionneurs intervenant - actionneurs 1c, 4b et 9b, respectivement des vanne d'injection 1a, vanne de mise à l'air libre 4a et vanne de sécurité 9a - sont des actionneurs pneumatiques, alimentés en gaz par du CO_{2_{G}}, prélevé sur le circuit d'alimentation 6 de la tête d'injection 1b.

A la considération de ladite figure et de la description ci-dessus, l'homme du métier a saisi tout l'intérêt de la présente invention qui propose une injection de CO_{2_{L}}, à un débit fixe, en mode cadencé, sous protection d'un flux de CO_{2_{G}} lors des arrêts d'injection. En effet :
- lors de l'injection du CO_{2_{L}} dans l'effluent liquide L, l'alimentation en CO_{2_{G}} s'interrompt automatiquement grâce au différentiel de pression ;
- par contre, dès l'arrêt de ladite injection de CO_{2_{L}}, l'alimentation en CO_{2_{G}} se rétablit instantanément avec un débit réglé minimal, isolant ainsi thermiquement l'aval de la zone d'injection (qui se trouve à environ -80°C) de l'effluent liquide L (lui, à une température positive).

Aux moyens nécessaires à la mise en oeuvre de ladite injection de CO_{2_{L}} sous protection de CO_{2_{G}}, on a associé avantageusement :
- un sous-ensemble de mise à l'air libre du flux gazeux de CO_{2_{G}} ;
- un sous-ensemble de contrôle de la température de l'effluent liquide L.

La présente invention est enfin illustrée par l'exemple ci-après.

Une installation du type de celle schématisée sur la figure annexée est utilisée dans les conditions ci-après.

L'effluent industriel liquide "à traiter" est transféré à des débits variables (de 30 à 50 m³/h), au moyen d'une pompe à 2,5 bars, d'un bassin amont vers un bassin aval se déversant dans l'égout. Ledit effluent ne peut toutefois être rejeté dans ledit égout, que si son pH moyen est au maximum de 8.

Une manchette inox DN 125 mm, équipée d'une vanne d'injection (vanne à boisseau sphérique + injecteur en sortie de vanne) ainsi que d'une tête d'injection, est placée (piquée dans la canalisation) juste après la pompe de transfert de sorte que le temps de contact : CO_{2_{L}} injecté/effluent traité, soit le plus long possible, entre les deux bassins.

La vanne d'injection est équipée d'un injecteur de 0,9 mm, qui assure un débit de 12 g de CO_{2_{L}} par s.

Le débit de gaz assurant la protection de la tête d'injection (CO_{2_{G}} prélevé sur le circuit d'alimentation en CO_{2_{L}}) a été ajusté à une valeur minimale d'environ 3 l/min.

Dès que la mesure du pH indique un pH de l'effluent supérieur à 8, du CO_{2_{L}} est injecté pendant une durée de l'ordre de 6 s sur 8 s de cycle fixé. La durée d'injection décroît ensuite jusqu'à s'annuler grâce à la boucle PID (qui assure une régulation Proportionnelle Intégrale Dérivée).

## Revendications

1. Procédé d'injection régulée de dioxyde de carbone liquide (CO_{2L}) dans un liquide (L) sous pression à l'intérieur d'une enceinte, dans lequel ledit dioxyde de carbone liquide (CO_{2L}) est injecté par un dispositif d'injection (1), comprenant une vanne d'injection (1a) et une tête d'injection (1b) piquée dans une paroi de ladite enceinte, ladite tête d'injection (1b) étant directement positionnée en sortie de ladite vanne d'injection (1a), **caractérisé en ce que** le dioxyde de carbone liquide (CO_{2L}) est injecté à un débit fixe, en mode cadencé, et **en ce que** dès chaque arrêt de ladite injection de dioxyde de carbone liquide (CO_{2L}),un gaz est délivré dans ledit liquide (L) au travers de ladite tête d'injection (1b), en lieu et place dudit dioxyde de carbone liquide (CO_{2L}) ; ledit gaz étant délivré à une pression suffisante pour éviter toute remontée dudit liquide (L) à l'intérieur de ladite tête d'injection (1b).

2. Procédé selon la revendication 1, **caractérisé en ce que** ledit gaz délivré est du dioxyde de carbone ; ledit dioxyde de carbone résultant avantageusement de la vaporisation d'une fraction de dioxyde de carbone liquide (CO_{2L}) prélevée sur le circuit d'alimentation (3) en dioxyde de carbone liquide (CO_{2L}), en amont dudit dispositif d'injection (1).

3. Procédé selon l'une des revendications 1 ou 2, **caractérisé en ce que** ledit gaz délivré dans ledit liquide (L) est, au moins en partie, évacué et avantageusement recyclé.

4. Procédé selon l'une quelconque des revendications 1 à 3, **caractérisé en ce que** ledit dioxyde de carbone liquide (CO_{2L}) est injecté à une pression amont comprise entre 14.10⁵ et 20.10⁵ Pa (14 et 20 bars) et à une température amont comprise entre -20°et -30°C.

5. Procédé selon l'une quelconque des revendications 1 à 4, **caractérisé en ce qu'**il est mis en oeuvre avec un contrôle de la température dudit liquide (L) ; l'injection de dioxyde de carbone liquide (CO_{2L}) étant arrêtée dès que la température dudit liquide (L) est inférieure à une température de consigne.

6. Procédé selon l'une quelconque des revendications 1 à 5, **caractérisé en ce qu'**il est mis en oeuvre pour l'injection régulée en mode cadencé de dioxyde de carbone liquide (CO_{2L}), dans un liquide (L) en circulation sous pression dans une canalisation (C ) ; le gaz délivré dans ledit liquide (L), dès que chaque arrêt de ladite injection de dioxyde de carbone liquide (CO_{2L}), étant avantageusement au moins une partie, évacué, lors des arrêts de la mise en circulation dudit liquide (L).

7. Procédé selon l'une quelconque des revendications 1 à 6, **caractérisé en ce que** ledit dioxyde de carbone liquide (CO_{2L}) est injecté à des fins de détartrage et/ou à des fins de prévention de l'entartrage.

## Claims

1. Method for the regulated injection of liquid carbon dioxide (CO_{2L}) into a liquid (L) under pressure inside a vessel, in which the said liquid carbon dioxide (CO_{2L}) is injected by an injection device (1) comprising an injection valve (1a) and an injection head (1b) tapped into a wall of the said vessel, the said injection head (1b) being positioned directly at the outlet of the said injection valve (1a), **characterized in that** the liquid carbon dioxide (CO_{2L}) is injected in stages at a fixed flow rate and **in that** as soon as each injection of liquid carbon dioxide (CO_{2L}) stops, a gas is delivered to the said liquid (L) through the said injection head (1b) in place of the said liquid carbon dioxide (CO_{2L}); the said gas being delivered at a pressure which is high enough to prevent any of the said liquid (L) being drawn back up inside the said injection head (1b).

2. Method according to Claim 1, **characterized in that** the said gas delivered is carbon dioxide; the said carbon dioxide advantageously resulting from the vaporizing of a fraction of liquid carbon dioxide (CO_{2L}) tapped from the liquid carbon dioxide (CO_{2L}) supply circuit (3) upstream of the said injection device (1).

3. Method according to one of Claims 1 and 2, **characterized in that** the said gas delivered to the said liquid (L) is, at least in part, removed and advantageously recycled.

4. Method according to any one of Claims 1 to 3, **characterized in that** the said liquid carbon dioxide (CO_{2L}) is injected at an upstream pressure of between about 14×10⁵ and 20×10⁵ Pa (14 and 20 bar) and at an upstream temperature of between -20°C and -30°C.

5. Method according to any one of Claims 1 to 4, **characterized in that** it is carried out with the temperature of the said liquid (L) being controlled; the injection of liquid carbon dioxide (CO_{2L}) being stopped as soon as the temperature of said liquid (L) drops below a set point temperature.

6. Method according to any one of Claims 1 to 5, **characterized in that** it is implemented for the regulated injection, in stages, of liquid carbon dioxide (CO_{2L}) into a liquid (L) flowing under pressure through a pipe (C); the gas delivered to the said liquid (L) as soon as each injection of liquid carbon dioxide (CO_{2L}) stops being advantageously, at least in part, removed when the said liquid (L) stops circulating.

7. Method according to any one of Claims 1 to 6, **characterized in that** the said liquid carbon dioxide (CO_{2L}) is injected for descaling purposes and/or for the purposes of preventing the build-up of scale.

## Patentansprüche

1. Verfahren zum regulierten Einspritzen von flüssigem Kohlendioxid (CO_{2L}) in eine unter Druck stehende Flüssigkeit (L) im Inneren einer Einfassung, wobei das flüssige Kohlendioxid (CO_{2L}) durch eine Einspritzvorrichtung (1) eingespritzt wird, die ein Einspritzventil (1a) und einen Einspritzkopf (1b) umfasst, der in einer Wand der Einfassung eingesetzt ist, wobei der Einspritzkopf (1b) direkt am Ausgang des Einspritzventils (1a) angeordnet ist, **dadurch gekennzeichnet, dass** das flüssige Kohlendioxid (CO_{2L}) mit einer fixen Leistung in Taktbetrieb eingespritzt wird, und dadurch, dass mit jedem Stopp des Einspritzens von flüssigem Kohlendioxid (CO_{2L}) über den Einspritzkopf (1b) anstelle des flüssigen Kohlendioxids (CO_{2L}) ein Gas in die Flüssigkeit (L) freigesetzt wird, wobei das Gas mit einem Druck freigesetzt wird, der ausreicht, um jegliches Wiederaufsteigen der Flüssigkeit (L) im Inneren des Einspritzkopfes (1b) zu verhindern.

2. Verfahren nach Anspruch 1, **dadurch gekennzeichnet, dass** das freigesetzte Gas Kohlendioxid ist, wobei das Kohlendioxid vorteilhafterweise von der Verdampfung eines Anteils des flüssigen Kohlendioxids (CO_{2L}) stammt, der dem Versorgungskreis (3) mit flüssigem Kohlendioxid (CO_{2L}) stromaufwärts von der Einspritzvorrichtung (1) entnommen wurde.

3. Verfahren nach einem der Ansprüche 1 oder 2, **dadurch gekennzeichnet, dass** das in die Flüssigkeit (L) freigesetzte Gas zumindest teilweise abgeführt und vorteilhafterweise recycelt wird.

4. Verfahren nach einem der Ansprüche 1 bis 3, **dadurch gekennzeichnet, dass** das flüssige Kohlendioxid (CO_{2L}) mit einem Anfangsdruck zwischen 14·10⁵ und 20·10⁵ Pa (14 und 29 bar) und einer Anfangstemperatur zwischen -20 °C und -30 °C eingespritzt wird.

5. Verfahren nach einem der Ansprüche 1 bis 4, **dadurch gekennzeichnet, dass** es mit einer Kontrolle der Temperatur der Flüssigkeit (L) umgesetzt wird, wobei das Einspritzen des flüssigen Kohlendioxids (CO_{2L}) gestoppt wird, sobald die Temperatur der Flüssigkeit (L) unter einer Solltemperatur liegt.

6. Verfahren nach einem der Ansprüche 1 bis 5, **dadurch gekennzeichnet, dass** es für das regulierte Einspritzen im Taktbetrieb von flüssigem Kohlendioxid (CO_{2L}) in eine Flüssigkeit (L) umgesetzt wird, die unter Druck in einer Rohrleitung (C) zirkuliert, wobei das Gas, das in die Flüssigkeit (L) freigesetzt wird, mit jedem Stopp des Einspritzens von flüssigem Kohlendioxid (CO_{2L}) vorteilhafterweise zumindest teilweise abgeführt wird, wenn die Zirkulation der Flüssigkeit (L) gestoppt ist.

7. Verfahren nach einem der Ansprüche 1 bis 6, **dadurch gekennzeichnet, dass** das flüssige Kohlendioxid (CO_{2L}) zu Zwecken des Entkalkens und/oder zur Vermeidung von Verkalkung eingespritzt wird.
